# EUROPÄISCHE PATENTSCHRIFT

(11) **EP 2 121 380 B1**
(45) Veröffentlichungstag und Bekanntmachung des Hinweises auf die Patenterteilung: **09.11.2016**
(21) Anmeldenummer: 08715712.9
(22) Anmeldetag: 07.02.2008
(51) Int. Cl.: B60N 2/68

(54) **STRUKTURTEIL, INSBESONDERE FÜR EINEN FAHRZEUGSITZ**
STRUCTURAL PIECE IN PARTICULAR FOR A VEHICLE SEAT
PARTIE STRUCTURELLE, EN PARTICULIER POUR UN SIÈGE DE VÉHICULE À MOTEUR

(30) Priorität: 13.02.2007 DE 102007007650; 21.05.2007 DE 102007023833
(43) Veröffentlichungstag der Anmeldung: 25.11.2009
(73) Patentinhaber: Johnson Controls GmbH, 51399 Burscheid (DE)
(72) Erfinder: STEPANKOWSKY, Marian, 70184 Stuttgart (DE); SEMMLER, Eckart, 52074 Aachen (DE)
(74) Vertreter: Wolff, Felix
(86) Internationale Anmeldenummer: PCT/EP2008/000962
(87) Internationale Veröffentlichungsnummer: WO 2008/098705

(56) Entgegenhaltungen:
- AT-B- 248 201
- DE-A1- 2 328 653
- DE-A1- 2 411 591
- DE-A1- 3 049 612
- DE-A1- 3 122 149
- DE-A1- 4 124 627
- DE-A1- 10 018 407
- DE-A1- 10 022 360
- DE-A1- 10 100 914
- DE-A1- 10 133 976
- DE-A1- 19 748 786
- DE-C- 749 763
- DE-C1- 3 440 240
- DE-U1- 29 812 841
- FR-A- 2 714 123
- JP-A- 2005 273 275

## Beschreibung

Die Erfindung betrifft ein Strukturteil mit einem ersten Teil und einem zweiten Teil, die durch eine stoffschlüssige Verbindung miteinander verbunden sind. Besonders geeignet ist dieses Strukturteil für die Rückenlehne eines Kraftfahrzeugsitzes.

Strukturteile dieser Art sind aus dem Stand der Technik, beispielsweise der DE 100 22 360 A1, der DE 101 00914 sowie der DE 298 12 841 U1 bekannt. Diese Strukturteile sind jedoch vergleichsweise aufwendig aufgebaut und bieten oftmals nicht die für den Automobilbau benötigte dynamische Festigkeit bei einem vergleichsweise geringen Gewicht.

Ein gattungsgemässes Strukturteil ist zum Beispiel aus der DE 41 24 627 A1 bekannt.

Es war deshalb die Aufgabe der vorliegenden Erfindung ein Strukturteil, insbesondere für einen Kraftfahrzeugsitz zur Verfügung zu stellen, das einfach aufgebaut ist, hohe dynamische Lasten aufnehmen kann und vergleichsweise leicht ist.

Gelöst wird die Aufgabe mit einem Strukturteil, insbesondere eines Kraftfahrzeugsitzes mit einem ersten Teil und einem zweiten Teil, die durch eine stoffschlüssige Verbindung miteinander verbunden sind, mit den Merkmalen des Anspruchs 1, wobei die Verbindung so gestaltet ist, dass sie im Wesentlichen Schubspannungen aufnimmt.

Das erfindungsgemäße Strukturteil ist einfach und relativ kostengünstig herzustellen und weist zumindest in einer bevorzugten Ausführungsform ein vergleichsweise geringes Gewicht auf.

Das erfindungsgemäße Strukturteil kann die dynamischen Kräfte, die insbesondere bei einem Kraftfahrzeugunfall auftreten, problemlos aufnehmen.

Erfindungsgemäß weist das Strukturteil ein erstes und ein zweites Teil auf, die durch eine stoffschlüssige Verbindung miteinander verbunden sind. Weiterhin erfindungsgemäß ist diese Verbindung so gestaltet, dass in ihr im Wesentlichen Schubspannungen auftreten. Dies bedeutet insbesondere, dass die Verbindungsflächen so gestaltet und/oder angeordnet sind, dass die Kräfte und/oder Momente, die im Betrieb auf das Strukturteil einwirken, in der Verbindung im wesentlichen Schub- und nicht oder nur geringe Normalspannungen erzeugen.

Erfindungsgemäss ist das eine / erste Teil ein Bestandteil des Rahmens eines Kraftfahrzeugsitzes, insbesondere der Struktur der Rückenlehne eines Kraftfahrzeugsitzes. Dieses Teil ist besonders bevorzugt aus einem Stahlblech, ganz besonders bevorzugt aus einem hochfesten Stahlblech gefertigt.

Erfindungsgemäss ist das andere / zweite Teil eine Basisplatte der Struktur eines Kraftfahrzeugsitzes, insbesondere der Struktur der Rückenlehne eines Kraftfahrzeugsitzes. Diese Basisplatte ist aus einem Leichtbauwerkstoff gefertigt und mit dem Rahmen der Struktur der Rückenlehne stoffschlüssig verbunden, erfindungsgemäss verklebt. Vorzugsweise ist die Basisplatte ein faserverstärkter Kunststoff.

Erfindungsgemäss weist das zweite Teil eine Aufnahme auf, in die ein Abschnitt des jeweils anderen / ersten Teils eingeführt und dort stoffschlüssig verbunden, erfindungsgemäss verklebt wird. Besonders bevorzugt ist diese Aufnahme an das jeweilige Teil angeformt, in das jeweilige Teil eingeformt und/oder an das jeweilige Teil angesetzt. Das Anformen kann beispielsweise dadurch erfolgen, dass die Aufnahme Teil einer Form ist, die abgeformt wird. Diese Form kann beispielsweise eine Gussform sein. Die Aufnahme kann auch mittels einer Extrusionsdüse extrudiert und dann abgelängt werden. Das Einformen kann beispielsweise dadurch erfolgen, dass die Aufnahme in das jeweilige Teil durch Umformen eingeprägt wird. Das Ansetzen erfolgt beispielsweise dadurch, dass die Aufnahme als separates Teil hergestellt und dann mit dem jeweiligen Teil verbunden wird.

Zwischen der Aufnahme und dem Abschnitt ist zumindest teilweise ein Spalt ausgebildet, der mit einem Stoffschlussmittel, vorzugsweise einem Klebstoff, zumindest teilweise gefüllt ist.

Die Aufnahme ist zumindest in dem dem anderen Teil zugewandeten Teil V-förmig gestaltet. Durch diese bevorzugte Ausführungsform ergibt sich zwischen dem in die Aufnahme eingeführten Teil und der Aufnahme ein Spalt, der sich in seiner Größe verändert, vorzugsweise mit zunehmender Einführtiefe verjüngt. Diese bevorzugte Ausführungsform der vorliegenden Erfindung hat insbesondere den Vorteil, dass sichergestellt ist, dass sich der gesamte Spalt mit dem Stoffschlussmittel, d.h., Klebstoff vor dessen Aushärten füllt. Weiterhin begünstigt die Formgebung das Ausformen der Aufnahme und die Aufnahme weist eine vergleichsweise geringe Elastizität auf.

Vorzugsweise weist die Aufnahme eine solche Einführtiefe und der Abschnitt, der in die Aufnahme eingeführt wird, eine solche Dicke auf, dass das Verhältnis H/D mindestens das 12-fache, besonders bevorzugt das 15 - 25, ganz besonders bevorzugt das 18 - 22-fache beträgt. Durch diese bevorzugte Ausführungsform der vorliegenden Erfindung ergeben sich besonders stabile Verbindungen.

Vorzugsweise weist der Klebstoff Füllkörper, vorzugsweise Glasfüllkörper auf.

Vorzugsweise sind die Füllkörper hohl. Insbesondere handelt es sich bei den Füllkörpern um Hohlkugeln. Besonders bevorzugt beträgt der Durchmesser der Hohlkugeln das 0,05 bis 0,25, vorzugsweise das 0,1 bis 0,2-fache der Dicke des Abschnitts des Teils, das in die Aufnahme eingeführt wird. Vorzugsweise weisen die Hohlkugeln einen Durchmesser von 100 -200 µm auf.

Das erfindungsgemäße Strukturteil ist vorzugsweise Teil der Rückenlehne eines Kraftfahrzeuges.

Im Folgenden wird die Erfindung anhand der Figuren 1 - 4 erläutert. Diese Erläuterungen sind lediglich beispielhaft und schränken den allgemeinen Erfindungsgedanken nicht ein.
- Figur 1: zeigt schematisch die Struktur der Rückenlehne eines Kraftfahrzeugsitzes
- Figur 2: zeigt eine Ausführungsform des erfindungsgemäßen Strukturteils
- Figur 3: zeigt ein Detail des Strukturteils gemäß Figur 2
- Figur 4: zeigt eine weitere Ausführungsform des erfindungsgemäßen Strukturteils

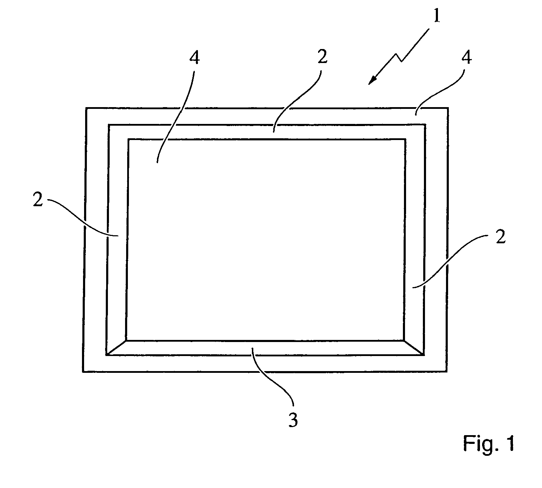

Das in Fig. 1 gezeigte Strukturteil 1 in Form einer Lehnenstruktur eines Fahrzeugsitzes besteht aus einem umlaufenden Rahmenteil 2 mit U-förmigen Querschnitt, welches aus Stahlblech gepresst ist und durch eine eingesetzte Querstrebe 3 aus Stahlblech verstärkt wird. Das Rahmenteil 2 ist auf eine Basisplatte 4 aufgesetzt, welche aus einem Leichtbauwerkstoff, in dem vorliegenden Fall faserverstärktem Kunststoff gepresst ist. Die Verbindung zwischen dem Rahmenteil 2 und der Basisplatte 4 erfolgt durch eine Verklebung.

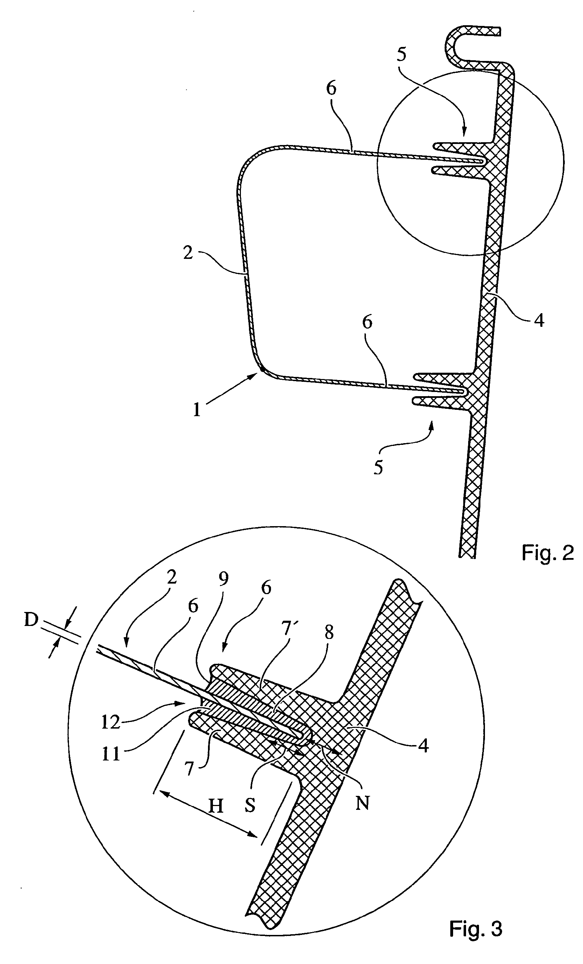

Fig. 2 zeigt einen Schnitt durch den Verbindungsbereich zwischen dem Rahmenteil 2 und der Basisplatte 4, welche mit angeformten Aufnahmen 5 für die Enden der Schenkel 6 des Rahmenteils 2 versehen ist. Die in Fig. 3 vergrößert dargestellten Aufnahmen 5 bestehen jeweils aus zwei auf der Basisplatte 4 umlaufend angeordneten Rippen 7, 7', die sich im Wesentlichen parallel zueinander orthogonal zur Oberfläche der Basisplatte 4 in Richtung des Rahmenteils 2 und damit parallel zu den Schenkeln 6 erstrecken.

Der Spalte 8 zwischen den Rippen 7, 7' weist im Spaltgrund mindestens die zweifache, vorzugsweise etwa die dreifache Breite der Blechdicke D der Schenkel 6 auf und erweitert sich in Richtung des Rahmenteils 2 keilförmig mit einem Winkel von 5° bis 20°, insbesondere etwa 10°. Der in den Spalt 8 eingebrachte Klebstoff 9 ist mit Füllkörpern, insbesondere mit Hohlglaskugeln, angereichert, deren Durchmesser etwa das 0,1- bis 0,2-fache, insbesondere das 0,15-fache der Blechdicke D beträgt. Die Einführtiefe H der Schenkel 6 beträgt etwa das 15- bis 25-fache, insbesondere das 20-fache der Blechdicke D. Erfindungswesentlich ist dabei, dass zumindest ein Teil der Aufnahme 5 im Bereich der Klebeverbindung im Wesentlichen parallel zum dem damit verklebten Bereich des Strukturteils 1, hier dem Schenkel 6, sowie etwa rechtwinklig zur Basisplatte 4 verläuft, wodurch im Wesentlichen, die durch den Doppelpfeil dargestellten Schubspannungen S in der Klebefuge erzeugt werden. Es werden vergleichsweise geringe, ebenfalls als Doppelpfeil dargestellte Normalspannungen N in der Klebverbindung erzeugt

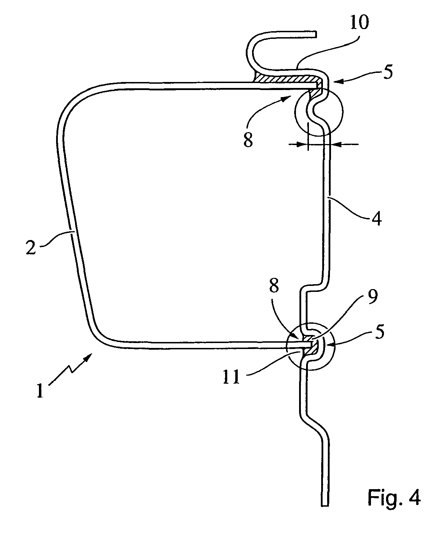

Fig. 4 stellt ein entsprechendes Strukturteil 1 mit einem Rahmenteil 2 aus gepresstem Stahlblech und einer gleichfalls gepressten Basisplatte 4 aus Aluminiumblech dar. Die Aufnahmen 5 sind dabei rinnenartig in die Basisplatte 4 eingepresst, wobei ein Schenkel 6 über einen verlängerten Bereich mit einer parallel verlaufenden Bördelung 10 der Basisplatte 4 verklebt ist. Bezüglich des Klebstoffes und der Abmaße der Aufnahme 5 wird auf das oben Gesagte verwiesen.

### Bezugszeichenliste:

- 1: Strukturteil
- 2: Rahmenteil
- 3: Querstrebe
- 4: Basisplatte
- 5: Aufnahme
- 6: Schenkel 7, 7' Rippe
- 8: Spalt
- 9: Klebstoff
- 10: Bördelung
- 11: stoffschlüssige Verbindung
- 12: Spalt
- D: Dicke
- H: Einführtiefe
- N: Normalspannung
- S: Schubspannung

## Patentansprüche

1. Strukturteil eines Kraftfahrzeugsitzes mit einem U-förmig vorgesehenen ersten Teil (2) und einem zweiten Teil (4), die durch eine stoffschlüssige Verbindung (11) miteinander verbunden sind, wobei die stoffschlüssige Verbindung (11) so gestaltet ist, das sie im Wesentlichen Schubspannungen (S) aufnimmt, **dadurch gekennzeichnet, dass** das zweite Teil (4) zwei angeformte Aufnahmen (5) jeweils mit einem Spalt (8) aufweist, in den jeweils das Ende eines Schenkels (6) des U-förmig vorgesehenen ersten Teils (2) eingeführt und klebend verbunden ist, wobei der Spalt (8) V-förmig gestaltet ist, die Breite des Spaltes (8) im Spaltgrund mindestens das Zweifache der Dicke des eingeführten Abschnitts des U-förmig vorgesehenen ersten Teils beträgt und sich der Spalt (8) mit einem Winkel zwischen 5 und 20° in Richtung des eingeführten U-förmig vorgesehenen ersten Teils erweitert, wobei zwischen der Aufnahme (5) des zweiten Teils (4) und dem eingeführten Ende eines der Schenkel (6) des U-förmig vorgesehenen ersten Teils beidseitig ein Unterspalt (12) ausgebildet ist, der mit einem Klebstoff gefüllt ist,
wobei die Teile (2, 4) aus jeweils unterschiedlichen Materialien bestehen, wobei das Material des U-förmig vorgesehenen ersten Teils (2) Stahl umfasst, wobei das Material des zweiten Teil (4) einen Leichtbauwerkstoff umfasst, **dadurch gekennzeichnet, dass** das U-förmig vorgesehene erste Teil (2) ein Rahmenteil mit U-förmigen Querschnitt eines Kraftfahrzeugsitzes ist und
das zweite Teil (4) eine Basisplatte der Struktur eines Kraftfahrzeugsitzes ist.

2. Strukturteil (1) nach Anspruch 1, **dadurch gekennzeichnet, dass** zwischen der angeformten Aufnahme (5) des zweiten Teils (4) und dem Ende des Schenkels (6) des U-förmig vorgesehenen ersten Teils (2) zumindest teilweise ein Unterspalt (12) ausgebildet ist, der mit einem Klebstoff (9) zumindest teilweise gefüllt ist.

3. Strukturteil nach einem der voranstehenden Ansprüche, **dadurch gekennzeichnet, dass** die Aufnahme (5) des zweiten Teils (4) eine Einführtiefe (H) aufweist und das Ende des Schenkels (6) des U-förmig vorgesehenen ersten Teils (2) eine Dicke (D) aufweist und dass das Verhältnis H/D mindestens das 12-fache, vorzugsweise das 15 - 25, besonders bevorzugt das 18 - 22-fache beträgt.

4. Strukturteil nach einem der voranstehenden Ansprüche, **dadurch gekennzeichnet, dass** die Aufnahme (5) in das zweite Teil (1) eingeprägt ist.

5. Strukturteil nach einem der voranstehenden Ansprüche, **dadurch gekennzeichnet, dass** der Klebstoff Füllkörper, vorzugsweise Glasfüllkörper aufweist.

6. Strukturteil nach Anspruch 5, **dadurch gekennzeichnet, dass** die Füllkörper hohl, insbesondere Hohlkugeln sind.

7. Strukturteil nach Anspruch 6, **dadurch gekennzeichnet, dass** der Durchmesser der Hohlkugeln das 0,05 bis 0,25, vorzugsweise das 0,1 bis 0,2-fache der Dicke (D) des Abschnitts (6) beträgt.

8. Strukturteil nach einem der voranstehenden Ansprüche, **dadurch gekennzeichnet, dass** es Teil der Rückenlehne eines Kraftfahrzeuges ist.

## Claims

1. Structural part of a motor vehicle seat, with a first part (2) provided in a U-shaped manner and with a second part (4), which parts are connected to each other by an integrally bonded connection (11), wherein the integrally bonded connection (11) is designed in such a manner that it substantially absorbs shearing stresses (S), wherein the second part (4) has two integrally formed receptacles (5), each with a gap (8), into which the end of a limb (6) of the first part (2) provided in a U-shaped manner is in each case inserted and connected in an adhesively bonding manner, wherein the gap (8) is of V-shaped design, the width of the gap (8) in the gap base is at least twice the thickness of the inserted portion of the first part provided in a U-shaped manner, and the gap (8) widens at an angle of between 5 and 20° in the direction of the inserted first part provided in a U-shaped manner, wherein a secondary gap (12) which is filled with an adhesive is formed on both sides between the receptacle (5) of the second part (4) and the inserted end of one of the limbs (6) of the first part (2) provided in a U-shaped manner, **characterized in that** the parts (2, 4) are composed in each case of different materials, wherein the material of the first part (2) provided in a U-shaped manner comprises steel, wherein the material of the second part (4) comprises a lightweight construction material, wherein the first part (2) provided in a U-shaped manner is a frame part with a U-shaped cross section of a motor vehicle seat, and the second part (4) is a baseplate of the structure of a motor vehicle seat.

2. Structural part (1) according to Claim 1, **characterized in that** a secondary gap (12) which is at least partially filled with an adhesive (9) is at least partially formed between the integrally formed receptacle (5) of the second part (4) and the end of the limb (6) of the first part (2) provided in a U-shaped manner.

3. Structural part according to either of the preceding claims, **characterized in that** the receptacle (5) of the second part (4) has an insertion depth (H) and the end of the limb (6) of the first part (2) provided in a U-shaped manner has a thickness (D), and **in that** the ratio H/D is at least 12 times, preferably 15-25, particularly preferably 18-22 times.

4. Structural part according to one of the preceding claims, **characterized in that** the receptacle (5) is impressed into the second part (4).

5. Structural part according to one of the preceding claims, **characterized in that** the adhesive has filling bodies, preferably glass filling bodies.

6. Structural part according to Claim 5, **characterized in that** the filling bodies are hollow, in particular are hollow balls.

7. Structural part according to Claim 6, **characterized in that** the diameter of the hollow balls is 0.05 to 0.25 times, preferably 0.1 to 0.2 times, the thickness (D) of the section (6).

8. Structural part according to one of the preceding claims, **characterized in that** it is part of the backrest of a motor vehicle.

## Revendications

1. Partie structurelle d'un siège de véhicule automobile comprenant une première partie (2) prévue en forme de U et une deuxième partie (4), qui sont connectées l'une à l'autre par une connexion par liaison de matière (11), la connexion par liaison de matière (11) étant configurée de telle sorte qu'elle reçoive essentiellement des contraintes de poussée (S), la deuxième partie (4) présentant deux logements façonnés (5) ayant chacun une fente (8) dans laquelle est insérée et connectée par collage à chaque fois l'extrémité d'une branche (6) de la première partie prévue en forme de U (2), la fente (8) étant configurée en forme de V, la largeur de la fente (8) au fond de la fente mesurant au moins deux fois l'épaisseur de la portion introduite de la première partie prévue en forme de U et la fente (8) s'élargissant avec un angle compris entre 5 et 20° dans la direction de la première partie insérée prévue en forme de U, une fente secondaire (12) étant réalisée des deux côtés entre le logement (5) de la deuxième partie (4) et l'extrémité insérée de l'une des branches (6) de la première partie (2) prévue en forme de U, laquelle est remplie d'un adhésif,
**caractérisée en ce que**
les parties (2, 4) se composent à chaque fois de matériaux différents, le matériau de la première partie prévue en forme de U (2) comprenant de l'acier, le matériau de la deuxième partie (4) comprenant un matériau de construction léger, la première partie prévue en forme de U (2) étant une partie de cadre de section transversale en forme de U d'un siège de véhicule automobile et la deuxième partie (4) étant une plaque de base de la structure d'un siège de véhicule automobile.

2. Partie structurelle (1) selon la revendication 1, **caractérisée en ce qu'**entre le logement façonné (5) de la deuxième partie (4) et l'extrémité de la branche (6) de la première partie prévue en forme de U (2) est réalisée au moins en partie une fente secondaire (12) qui est au moins en partie remplie d'un adhésif (9).

3. Partie structurelle selon l'une quelconque des revendications précédentes, **caractérisée en ce que** le logement (5) de la deuxième partie (4) présente une profondeur d'insertion (H) et l'extrémité de la branche (6) de la première partie prévue en forme de U (2) présente une épaisseur (D) et **en ce que** le rapport H/D vaut au moins 12, de préférence 15 à 25, particulièrement préférablement 18 à 22.

4. Partie structurelle selon l'une quelconque des revendications précédentes, **caractérisée en ce que** le logement (5) est gaufré dans la deuxième partie (4).

5. Partie structurelle selon l'une quelconque des revendications précédentes, **caractérisée en ce que** l'adhésif présente des corps de charge, en particulier des corps de charge en verre.

6. Partie structurelle selon la revendication 5, **caractérisée en ce que** les corps de charge sont creux, en particulier sont des billes creuses.

7. Partie structurelle selon la revendication 6, **caractérisée en ce que** le diamètre des billes creuses représente 0,05 à 0,25, de préférence 0,1 à 0,2 fois l'épaisseur (D) de la portion (6).

8. Partie structurelle selon l'une quelconque des revendications précédentes, **caractérisée en ce qu'**elle fait partie du dossier d'un véhicule automobile.
